# EUROPEAN PATENT SPECIFICATION

(11) **EP 1 203 493 B1**
(45) Date of publication and mention of the grant of the patent: **20.10.2004**
(21) Application number: 99936903.6
(22) Date of filing: 09.08.1999
(51) Int. Cl.: H04N 7/24, H04N 5/00

(54) **SERVICE BROWSER PROCESS AND RELATED SYSTEM**
DIENSTBROWSERVERFAHREN UND SYSTEM
PROCEDE DE NAVIGATION ENTRE SERVICES ET SYSTEME CORRESPONDANT

(43) Date of publication of application: 08.05.2002
(73) Proprietor: Open TV, INC., Mountain View, CA 94043 (US)
(72) Inventor: MUEHLBACH, Jobst, F-75010 Paris (FR)
(74) Representative: Freeman, Jacqueline Carol
(86) International application number: PCT/IB1999/001437
(87) International publication number: WO 2001/011887

(56) References cited:
- EP-A- 0 396 062
- EP-A- 0 735 766
- EP-A- 0 757 485
- EP-A- 0 827 340
- WO-A-98/31116
- US-A- 5 734 589
- US-A- 5 822 123
- US-A- 5 929 850

## Description

### Field of the invention

The present invention relates to a service browser process and the corresponding system.

A service browser process is a process for controlling navigation between a plurality of services and/or channels in a digital Integrated Receiver Decoder (IRD) that provides links to other services within a radio-broadcasting or TV environment, or across TV networks, and allows the viewer to tune to those services.

Services are regular TV or radio services, or any application or communication data channel as for instance indicated in the DVB service descriptor of the MPEG-2 standard.

A service consists of one or more components or tracks transmitting video, audio or application data.

### Background of the invention

The process of changing from one TV channel to another is often called « channel zapping » or « channel surfing ». This particular type of browser application will be referred to hereafter indifferently as « Surfer application » or « Surfer ».

A Surfer logically can be seen as a gate to a selection of services or list of services.

In other words, Surfer is used as a general term describing a broadcasted application that is designed to handle the presentation of a list of services and will react to particular events like remote control key messages, but is not related to a specific application. It is also already observed that a Surfer is one level above the other applications hereafter referred to as normal applications or EPG applications as defined in the DVB standard.

The invention is more particularly but not exclusively related to a process and a system implemented within the digital interactive TV environment.

In digital TV Broadcast environment any interactive decoder is decoding video, audio and data streams, regardless of the fact that it is connected to a cable, satellite or terrestrial network.

For instance, **[1]** ETS 300 468 Specification for Service Information (SL) in Digital Video Broadcasting (DVB) systems, and **[2]** ISO/IEC DIS 13818 -1, Generic coding of moving pictures and associated audio information; Part 1 Systems, describe ways to include multiplex and retrieve single data streams into different broadcast environments.

More generally it is observed that applications are transmitted in data streams and processed in the decoder's memory.

The Surfer of the prior art is not broadcasted and consists of a built-in application, called Banner, stored in the decoder in order to allow a user to navigate or surf through all available services.

This built-in software presents all services to the viewer and enables the channel changing process. In other words the Banner handles all channel-changing processes inside the decoder.

More particularly apart from internal set-up menus, the Banners of known IRD incorporates an embedded way presenting one or more lists of services to the TV viewer, for instance one TV list and one radio list. These lists and all navigation functions within these lists, are controlled by the manufacturer's navigation software.

For such control of the navigation software, the relevant network operator has previously provided the needed instruction to the manufacturers of the IRD.

This is for instance the case of PayTV networks, renting their decoder platform.

However, the built-in Banner involves two main disadvantages in the channel navigation concept, i.e. the navigation interface looks different on each type of decoder, and competing broadcasters or service providers that share the decoder platform do not have any control on promoting their own channels or services.

US 5 734 589, US 5 822 123 and WO 98 3 11 16 A illustrate that navigation software may be downloaded as well as the availiability of multiple service providers.

### Summary of the present invention

The present invention aims at solving these drawbacks and disadvantages.

For this it is a main object of the present invention to provide a process and a system which render possible to download within the decoder the Surfer corresponding to the selected application, and to display such Surfer on a real-time basis, therefore providing to the user the required look and feel and services corresponding to the relevant provider, while maintaining reception of the selected service and authorising reception of other services coming from other sources (transponders) different from the one of the Surfer.

It is another object of the invention to provide navigation control functions to a broadcaster Surfer application, to allow running the same browser on different IRDs from different manufacturers.

This guarantees the same user interface and behaviour across various decoders, while embedded browsers come with their individual look and feel different from the built-in software.

It is another object of the invention to provide an incorporated and cost saving process and system for perfect surfing.

Specifically, in one aspect the invention proposes a service browser process for controlling navigation events between a plurality of services and/or channels of a digital interactive Radio Broadcasting system including at least one digital interactive decoder said system broadcasting applications to be received by said decoder, wherein the process proposes said services to a user of said decoder and enables the navigation to other services or channels through control means activated by said user, characterised in that the applications being categorised into at least two types of applications including a first type corresponding to a downloadable application termed Surfer application designed for controlling said navigation and having knowledge of said services, and a second type corresponding to a built-in application for presenting services, termed the built-in Banner, the process comprises the steps of:
(i) identifying in a broadcast stream a Surfer application;
(ii) tuning to a service with the identified Surfer;
(iii) downloading the Surfer application within a dedicated part of the Decoder memory, called Surfer Cache;
(iv) detecting a navigation event;
(v) checking whether a Surfer application is available or said decoder is under the control of a Surfer application;
(vi) routing said navigation event to the Surfer application in response to determining the Surfer application is available or the decoder is under the control of the Surfer application; and
(vii) routing said navigation event to a built-in Banner responsive to determining no Surfer application is available and the decoder is not under the control of a Surfer application.

When a Surfer is started, it allows the user to tune to another channel while still remaining active.

By navigation event one should understand any event of navigation between services such as for instance channel up or channel down.

Advantageously, the Surfer application is stopped when an application different from a Surfer application, termed normal application, is displayed, and the Surfer application is re-launched from its Surfer Cache when said normal application is finished or a navigational event occurs.

Equally advantageously a plurality of Surfer applications being possible, it comprises the step of :
- presenting an interface using a list of services that allows the user to select one particular Surfer application among said list and to come back to said list after selection, if wanted.

In a preferred embodiment, the process is implemented in a DVB environment, the Surfer applications being signalled in Bouquet Association Tables (BAT).

A bouquet is a broadcasted service list.

Advantageously, and in order to reduce switching time between several bouquets (i.e. service lists) containing Surfer applications, the process includes the step of downloading a plurality of Surfer applications, within corresponding Surfer Caches. Several Surfers can therefore be prefetched into these different caching areas inside the decoder's memory, and are launched when or after the viewer has requested a certain bouquet or service list.

Advantageously, a unique identifier is provided to attach a Surfer application to a bouquet or service list in order to retrieve the proper Surfer application on viewer's bouquet selection.

The system is then able to tune directly to one of the bouquet's service and bring up the Surfer from its Cache.

This allows a quicker service as it is not necessary to download the relevant Surfer when needed.

The invention also provides a system for implementing the process as described above.

According to a second aspect the invention also provides a digital Interactive Radio-Broadcasting system for controlling navigation events between a plurality of services and/or channels, including at least one digital interactive decoder, said system broadcasting applications to be received by said decoder, wherein the system proposes said services to a user of said decoder and enables the navigation to other services or channels through control means activated by said user, characterised in that the applications being categorised into at least two types of applications including a first type termed Surfer application designed for controlling said navigation and having knowledge of said services, and a second type corresponding to a built-in application for presenting services, termed the built-in Banner, the decoder comprises:
(i) identifying means for identifying in a broadcast stream a Surfer application;
(ii) means for tuning to a service with the identified Surfer;
(iii) downloading means for downloading the Surfer application within a dedicated part of the decoder memory, called Surfer Cache;
(iv) detection means for detecting a navigation event;
(v) checking means for checking whether a Surfer application is available or said decoder is under control of a Surfer application;
(vi) routing means arranged for routing said navigation event to the Surfer application in case the Surfer application is available or the decoder is controlled by said Surfer application; and
(vii) routing means arranged for routing said navigation event to a built-in Banner in case no Surfer application is available and the decoder is not controlled by said Surfer application.

Also advantageously, the system comprises stopping means for stopping the Surfer application when a normal application is displayed, and re-launching means for re-launching said Surfer application from the Surfer Cache when said normal application is finished.

In an advantageous embodiment, a plurality of Surfer applications being possible, it comprises means for presenting an interface using a list of Surfers that allows the user to select one particular Surfer application among said list and to come back to said list after selection, if wanted.

Preferably the system is implemented in a DVB environment, the Surfer applications being signalled in Bouquet Association Tables (BAT).

Advantageously, there is a plurality of Surfer Caches.

More categories can also be selected but what is important is to be able to identify Surfer applications.

More generally, the Surfer applications have or may have the following properties:
- They must be stored in the decoder to control channel navigation.
- A Surfer application is always running if there is no other normal application requesting to be executed.
- Surfer applications are controlling all navigation events.
- Surfer applications have knowledge on services, service order and service properties and Surfer applications are downloaded into the decoder each time the viewer selects a particular Surfer.

In another embodiment, such downloading is not necessary at each time, as a plurality of Surfers may be simultaneously stored in the decoder and retrieved at demand.

For this, Surfer controlled navigation requires an additional recognition process, physical memory for temporary caching the Surfers, and a built-in Surfer selection layer in the decoder's user interface.
- The recognition process is a software component in the system that is detecting a Surfer application.
- This process has knowledge about normal and Surfer applications.

According to the embodiment of the invention more particularly described here and while normal applications are directly loaded and executed into decoder's memory, a Surfer application will first be stored into the dedicated part of the decoder memory (Surfer Cache) and after it will be loaded and executed from its Cache.

### Brief description of the drawings

The present invention will be better understood from reading the following description of particular embodiments given by way of non limiting examples, with reference to the accompanying drawings, wherein :

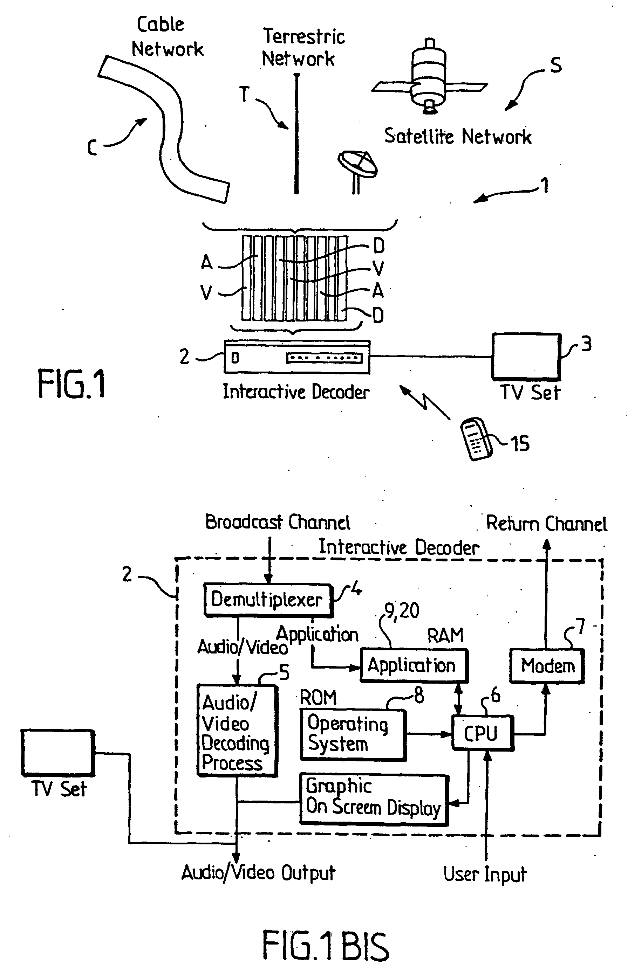

Figure 1 shows a schematic diagram figuring the a TV broadcasting system to be used with the invention.
Figure 1bis is a more detailed block diagrams of an Integrated Receiver Decoder (IRD) used with the invention.
Figure 2 shows a schematic view of the inside memory of a decoder of the prior art, with two examples of remote control key events accessing the system for navigation purpose
Figure 3 shows a schematic view of the inside memory of a decoder according to one embodiment of the invention, with an example of a simplified flowchart navigations events accessing the system.
Figure 4 is a flowchart highlighting the fact that a service is selected either using a Banner or a Surfer, according to an embodiment of the invention.
Figure 5 is a functional diagram illustrating the paths a user/viewer could choose according to an embodiment of the invention.
Figure 6 shows a flowchart figuring an example of Surfer implementation according to the invention.
Figure 7 is a flowchart giving an example of interactions between system, Surfer and normal applications according to the invention.

### DETAILED DESCRIPTION

Figure 1 shows a digital Interactive Radio-broadcasting system 1 comprising an interactive decoder 2 to be connected to a TV set 3, receiving audio signals A, video signals V and data streams signals D from broadcasting networks, i.e. the cable Network C, the terrestrial Network T, and/or the satellite network S.

The decoder 2 comprises (see figure lbis), in a manner known per se, a demultiplexer 4 connected to an Audio/Video Decoding process circuit 5, a CPU 6 connected to a modem 7, a ROM 8 for storing the operating system of the decoder, such as the Open TV operating system, and a read/write memory 9, such as a RAM for storing the broadcasted applications.

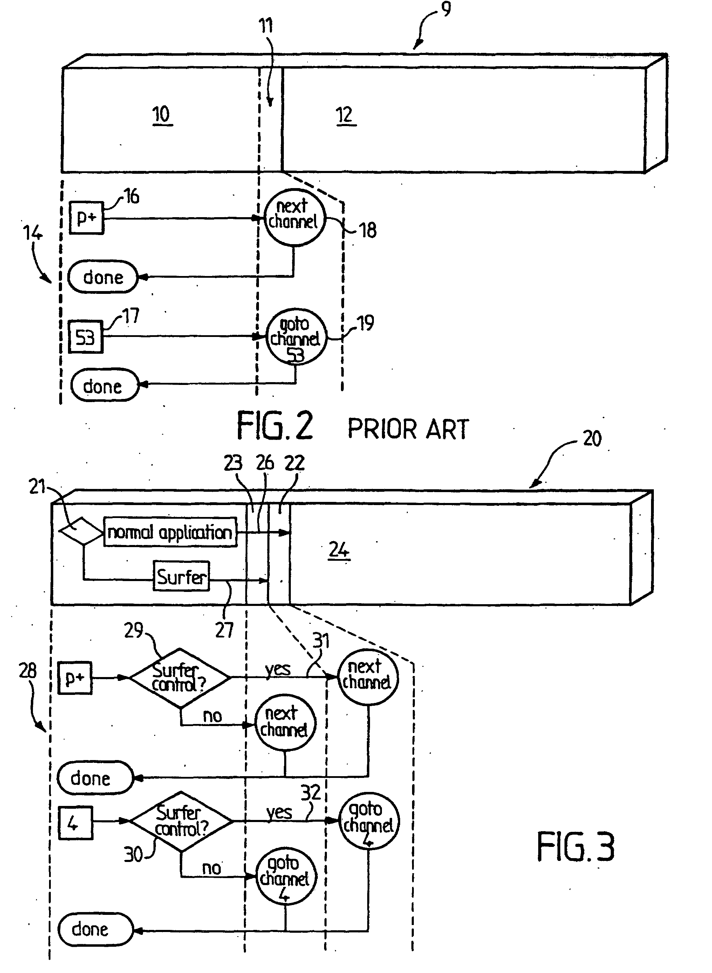

Figure 2 shows a simplified view of the inside memory 9 of a decoder of the prior art. The memory 9, typically a RAM of 2 Mbytes or more, includes a first part 10 storing some system applications of the decoder, and a built-in Banner 11, or built-in navigator software, developed by the decoder manufacturer. The built-in Banner allows access to services.

In the DVB environment described in ETS 300 468 [1], the list of services is referred to as a « bouquet ».

As already mentioned a bouquet is a service list which is broadcasted within a DVB Bouquet Association Table-BAT.

The memory 9 further includes a part 12 for storing a normal broadcasted application.

In the remaining part of the text it will also be sometimes referred to elements mentioned in the MPEG-2 Standard, (system ISO/IEC 13818-1 of Nov. 1994 [3])

Figure 2 shows in 14, two examples of navigational events activated by a remote control device 15 (see figure 1) of the prior art.

By pressing remote control key 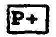 (key 16) or (key 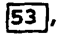 the user activates navigational events 18 « next channel » or 19 « go to channel 53 » which are forwarded to the built-in Banner application stored in 11.

The orders are followed by internal channel order which provides the change from the current channel to the next channel or to channel 53.

Figure 3 shows the inside memory 20 of a decoder 2 according to the embodiment of the invention more particularly described here, corresponding to the Open TV environment in TV broadcasting.

However, the invention shall of course not be considered as limited to such environment.

The decoder's memory 20 includes within its system a recognition program 21 in order to identify Surfer application from normal applications or other applications such as an Electronic Program Guide (EPG) application.

As already mentioned in the embodiment more particularly described here in a DVB environment, a Surfer is an application presenting all services, and for instance but not limitatively their current and following events of a particular bouquet.

The Surfer is capable of running on top of any TV service and allows the viewer to tune from one channel to another within a bouquet.

During such « channel surfing », the broadcasted Surfer remains alive and active.

For identifying and then retrieving a Surfer from the broadcasted signals, the Surfers are identified and transmitted in a particular service, through the Bouquet Association Table (BAT).

Such service includes a component called "SURF" identified by a specific flag.

According to the invention, the memory 20 comprises at least a Surfer Cache 22 which is dedicated for storing retrieved Surfers into the decoder. Once a Surfer is stored in decoder's memory, it will be re-launched from memory each time any other application is stopped.

As mentioned the other applications are mainly Electronic Program Guide (EPG) applications that are being to transmitted in certain services, and normal applications.

An EPG is structurally identical to a normal application and displays information on the contents of events, i.e. TV, Radio or Data events.

It is reminded that an event is information data on a service, is only related to the content and for instance is not related to any frequency or transponder.

It is also reminded that a service consists of video, audio or application data, or any combination of these three components.

A plurality of video, audio or application data streams may generally occur within one service.

All other broadcasted applications different from Surfer are defined as normal applications or EPG.

They are transmitted as default applications component in any service. They are not privileged by authorisation flags, for instance for changing channel or for getting stored in the memory of the decoder.

The memory 20 further includes a built-in Banner 23 as already described in reference to figure 2, and additional registers of memory 24, for storing and processing a normal or EPG application.

The interactive decoder according to the invention having knowledge about normal and Surfer applications, normal applications are directly loaded (arrows 26) and executed into decoder's memory 24.

On the contrary a Surfer application (arrow 27) is first stored into the Surfer Cache 22 and then executed from its Cache into the memory 24.

Once a Surfer is loaded in its Cache and running, the decoder is under control of this Surfer.

Referring to the flowchart 28 of the lower part of figure 3, any navigation event, like channel up (Key 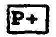 or change of channel to another channel (key 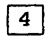 for instance), is first going through the recognition process (diamond 29 and 30) to find out if they need to get forwarded to the built-in Banner in 23 or to the downloaded Surfer in 22, the keys pressed may then having another result.

In case the decoder is Surfer controlled (arrows 31, 32) the navigation events are rerouted to the Surfer application and the built-in Banner is disabled.

The look and feel of the request channel is therefore different from the built-in look and feel.

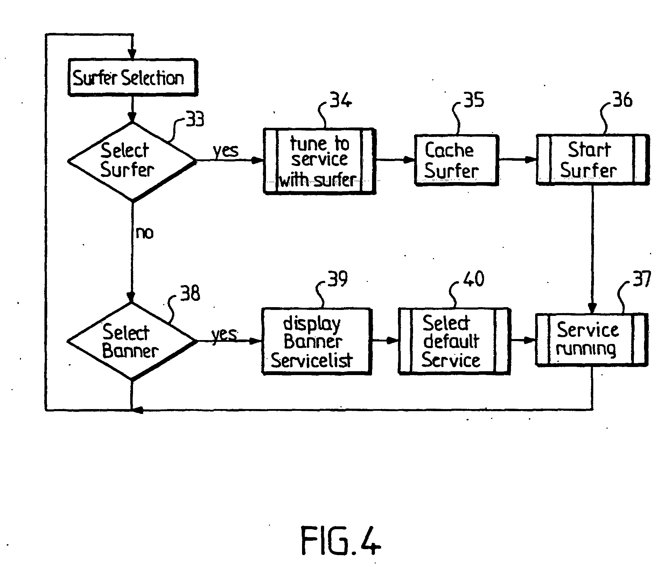

Figure 4 is a block diagram highlighting the selection layer as provided in the embodiment of the invention more particularly described here, showing that a service is selected either using a Banner or a Surfer. If a Surfer is detected (diamond (33), the system tune to the service with Surfer (step 34), load in the Cache (step 35), and start the Surfer (step 36) for running service (step 37). If not, the Banner is selected in 38, the service list is displayed in 39, and the service is selected (step 40) for service running (step 37).

In an advantageous embodiment the Surfer which is running may be in a transparent mode by default. For instance, the Surfer may only process specific features (i.e. displaying an additional graphic) while the viewer is watching TV.

In such case, a user can make a Surfer going from transparent mode, in a reversible fashion.

The Surfer which is temporarily stored in the decoder RAM-memory, allows a fast access whenever it is requested.

For this it is designed and implemented to fit in the decoder's dedicated Cache memory space (Surfer Cache) which may be, for instance of 64 to 128 kbites.

Therefore storing in the Cache or « caching » the Surfer allows any bouquet operator to add channels of other transponders to his bouquet, which does not contain any Surfer application.

In case the Surfer is requested to quit, it can be reloaded from memory although there is not anymore connection to any transponder carrying bouquets Surfer, which is one of the results of the invention.

Generally there is only one application using the application memory at a time. This requires a reloading process of the Surfer from its Cache after the Surfer has to be stopped when a normal application is processed.

When the displaying of normal applications are finished, the Surfer is re-launched from its Cache.

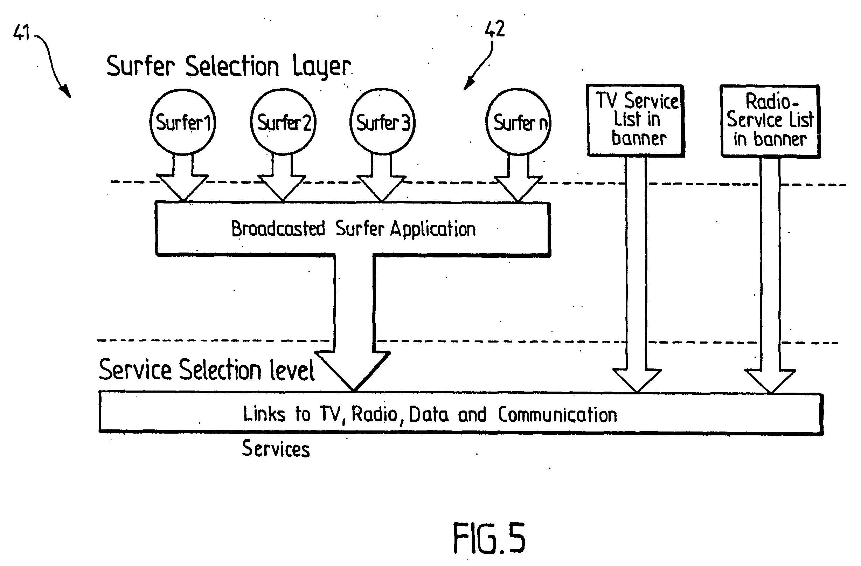

Figure 5 shows that several Surfers (Surfer 1, Surfer 2, ...) may be available in the environment. The decoder system 41 is then advantageously in charge of presenting an interface 42 using a list of services that allows a viewer to select one particular Surfer.

The system will then reserve a key on the remote control device that leads the viewer back to the Surfer selection layer.

It will now be described more precisely an embodiment of the process of the invention, involving a built-in Banner software, hereafter referred to as the Navigator, and wherein there are several bouquets, i.e. services lists broadcasted within several DVB Bouquet Association Tables (BAT).

The user or viewer uses a remote control device having a keyboard, for instance according to the following table.

**Table 1 -**

| **Remote Control Buttons** | | |
|---|---|---|
| List of keys | | |
| button | | Description |
| Navigator or surfer selection | m | It is used to launch or activate the Navigator |
| EPG or Surfer | m | It is used to launch a Surfer or an EPG application |
| OK | m | It is used to confirm a selection and to activate a process |
| Arrow Up | m | It is used for user interface navigation. Any application can use it for its own purpose |
| Arrow Down | m | |
| Arrow left | m | |
| Arrow Right | m | |
| Bookmark | m | It is designed to select bookmark-related features in the EPG or Surfer. It can furthermore be used by any application to mark or unmark a selection or for any other purposes. |
| Channel Up | o | If it appears on a remote control it shall switch channels only within the currently active service list. |
| Channel Down | | |
| Colour Red | m | Colours buttons can be used by any application for its own purpose |
| Colour Green | m | |
| Colour Yellow | m | |
| Colour Blue | m | |
| Numeric Keys | | Numeric Keys (labelled from 0 to 9) can be used by any application for its own purposes. Furthermore they can be used by Navigator of Surfer to enter directly any channel/service number in the current service list. |
| Exit | o | This key is used to finish any application. It is considered as "emergency halt" whenever the user does not want to continue an application. |
| m = mandatory and o = optional | | |

Whenever the viewer powers on the decoder, the Navigator is started. It will then display the Navigator first page or recover the last session before the decoder was turned off. The decoder may also be put on stand by in a way known per se.

A bouquet is then selected form the built-in Navigator.

After selecting a bouquet, the Navigator launches the bouquet's Surfer service, which is advantageously also the bouquet's default service, and finds the Bouquet's Surfer application indicated in the bouquets default service PMT (Program Map Table).

PMT is defined in the MPEG-2 standard [3].

The Surfer application is then downloaded into the decoder and temporarily stored in the Surfer Cache of the decoder's RAM. This portion of memory is designed to hold a bouquet Surfer as long as the viewer stays in the bouquet. After downloading the Surfer, the Navigator will start the Surfer application.

Following descriptors in BAT are for instance available :

**Table -**

| **Linkage Descriptors in BAT** | |
|---|---|
| Linkage Type (LT) | Meaning |
| 1 | bouquet carries a Surfer service ID in linkage descriptor is Surfer service (Surfer service = = default + surf-track) |
| 2 | there is an EPG-Service in bouquet (no Surfer) service ID in linkage descriptor is EPG-service |
| 5 | a bouquet-default-service exists service ID in linkage descriptor is default service |

This provides several type of linkage, i.e. for example :

### Linkage Type 1

A linkage descriptor of linkage type 1 tells the Navigator that the bouquet associated with the BAT contains a broadcasted Surfer application. In order to load and launch the Surfer first, the Navigator must tune to the Surfer service. This service is indicated in the linkage descriptors service ID. The Navigator then will load the application that comes on the component called « SURF ».

### Linkage Type 2

A linkage descriptor of linkage type 2 tells the Navigator, that the bouquet that is associated with the BAT does not contain a broadcasted Surfer application but a dedicated EPG application. The EPG button on the remote control is triggering the Navigator to tune to the dedicated EPG service and to launch the application that comes on the default track.

Note : Since no Surfer is presenting the service list of this bouquet to the viewer, the manufacturers Navigator of the Built-in Banner is used to present the bouquets services on the TV screen.

### Linkage Type 5

A linkage descriptor of linkage type 5 tells the Navigator that the bouquet does not contain any EPG or Surfer, but that one service is representing the bouquets default service. This service could be used by the Navigator as a first service to launch, in case the Navigator requires running video/audio in the background on bouquet entry. (this is only true, if Navigator's OnScreen display does not cover the whole screen and that some video needs to be playing in the background).

Following the explanations above, one can identify five meaningful combinations of linkage descriptors which are summarised in Table 3 - linkage type matrix.

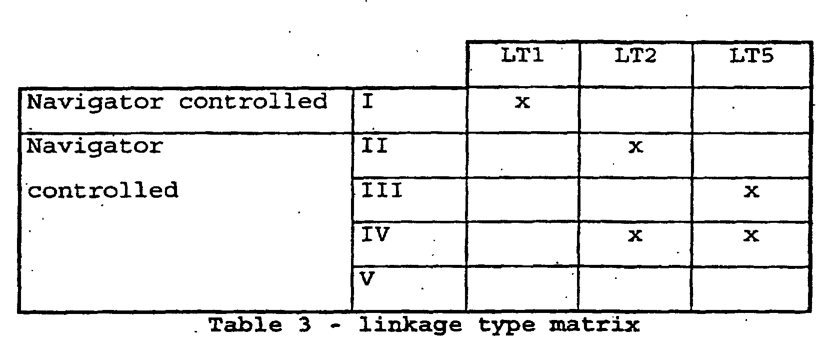

**Case I** : only linkage type 1 is indicated in the BAT. Using the service ID in the linkage service is also the default TV service. The Navigator will therefore turn on Video and Audio and then starts loading and launching the bouquets Surfer. The Surfer service is implicitly also the default service.

**Case II** : only linkage type 2 is set in the BAT. The Navigator has to present the bouquets service list and offer surfing capabilities. As soon as the viewer presses the EPG button on the remote control, the navigator will tune to the service that is indicated in the linkage descriptors service ID and launch the default application.

**Case III** : only the default service is indicated in the linkage descriptor of linkage type 5 in the BAT. If Navigator's user interface is covering the whole TV screen - no video is running in the background and therefore no video has to be turned on. But if the Navigator is transparent or only partially covering the TV screen then the Navigator shall first tune to the bouquets default service.

**Case IV** : Linkage type 2 and linkage type 5 are both indicated in the BAT. This means that the Navigator first shall make use of the default service and whenever the user is about to press the EPG button the Navigator is launching the EPG application from the indicated service.

**Case V** : No linkage descriptor is indicated in the BAT. The Navigator must present the service list coming from the BAT to the viewer. Furthermore the first service in the service list is the default service. No EPG or Surfer is available. The EPG button will release a message explaining that no EPG or Surfer is available for this bouquet.

As mentioned, in the DVB environment, see also reference [1], a Surfer is supporting the understanding of bouquets and are signalled in bouquet association tables - BAT.

A "private data specifier" in the first loop of the BAT indicates that further descriptors have a certain meaning, a following linkage descriptor type == 1 containing a service ID, of the service that carries the Surfer application.

This service has a track tag "SURF", indicating that this component is carrying the Surfer application.

For Surfers indicated in the DVB service type, an example of routine to build up decoder-internal knowledge of available Surfers and Bouquet Association Tables is given hereafter :

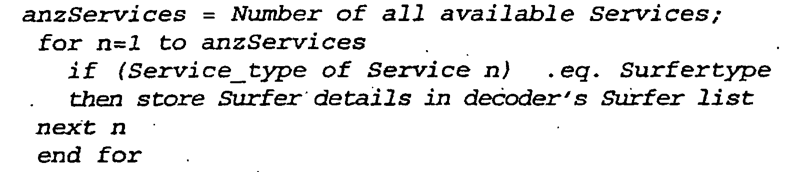

For Surfers indicated in a DVB Bouquet Association Tables, an example of the following routine applies to build up internal knowledge of available Surfers:

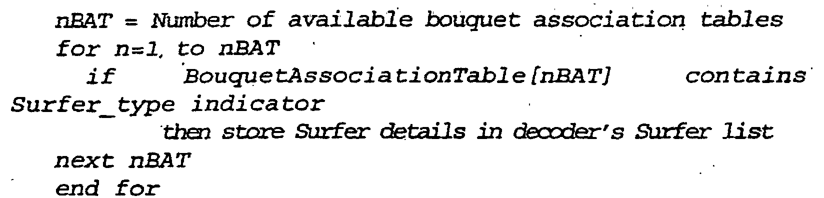

Scanning for DVB bouquet association tables (BAT) or service description tables (SDT) is processed according to DVB SI standard, the disclosure of which is incorporated herein by reference.

More specifically OpenTV applications are using flags to indicate application properties. The OpenTV inflash flag for applications and for each application module will here tell the recognition process in the system that a particular application is a Surfer application.

The application flag is also used to avoid unexpected loading of Surfer applications.

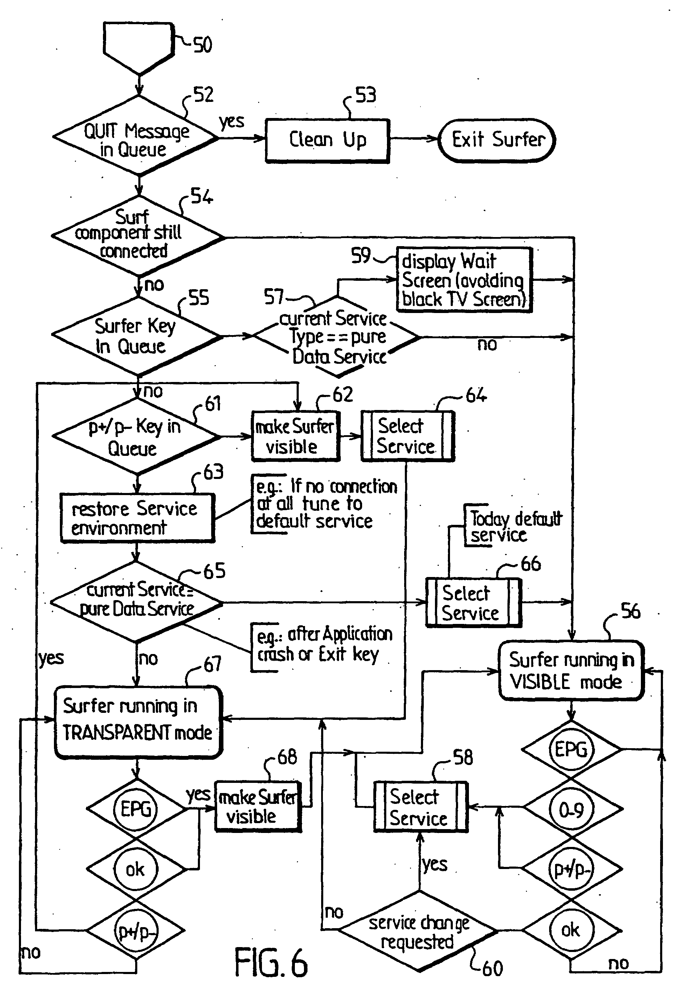

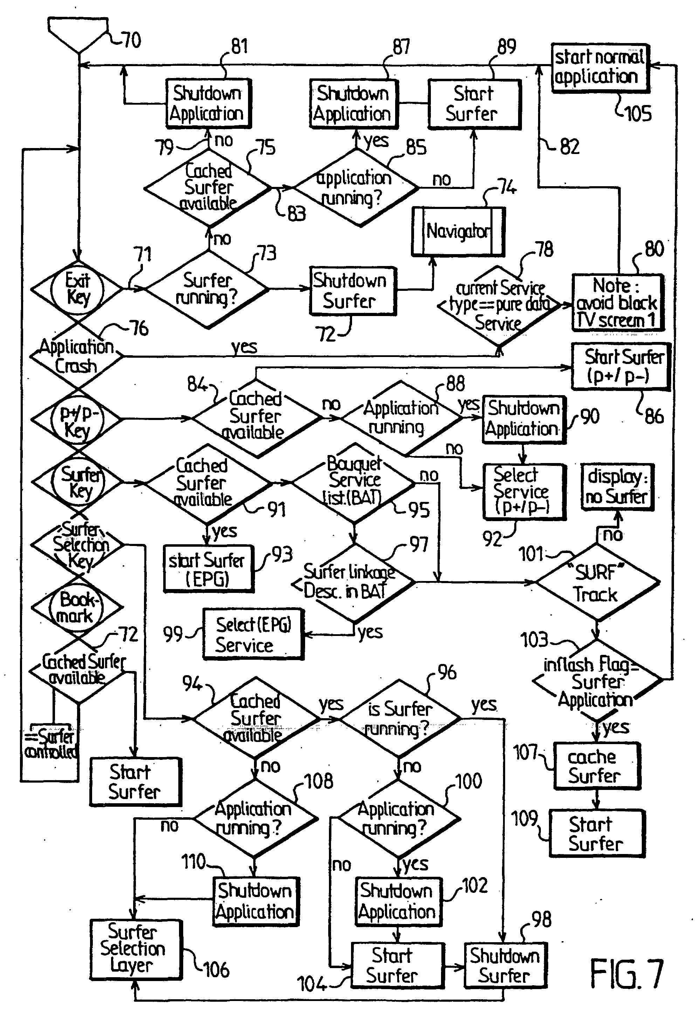

Diagrams of figures 6 and 7 illustrate the implementation of a Surfer according to the embodiment of the invention more particularly described here.

In the diagrams, rectangles represent states, rectangles with right and left borders refer to other programs (not developed particularly), diamonds are yes/no test and diamonds containing circles refer to Remote Control button press/release events.

Once a Surfer is downloaded, it can be started in 50.

A Surfer can start in transparent or in visible mode. It is up to the Surfer to find out if it needs to display anything on screen or if it is better to stay in transparent mode.

Each time the Surfer is launched it will explore current service environment in order to guarantee proper service handling.

Since in this embodiment of the invention, Surfer is a bouquets control-application, it is launched on bouquet entry and also on bouquet exit. Launching the Surfer on bouquet-exit provides a way of cleaning up the current bouquet session.

The Surfer will then identify events in its message queue according to its status while launching.

Diagram of figure 6 illustrates, as a non limitative example, a Surfer behaviour model.

Other Surfers might offer less or more functionalities but the Navigator needs to be implemented in order to interoperate with such described Surfer behaviour.

A test 52 to quit the Message in queue is provided either to clean up in 53 and exit, or to restore the Service and test if the Surfer is still connected in 54.

If the Surfer is connected, the Surfer runs in visible mode (step 56).

Then, pressing a Key among 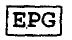 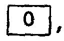 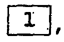 ... 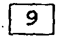 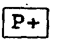 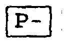 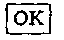 allows for selecting services (step 58) of for changing service (test 60) and/or exiting the visible mode.

If the Surfer is connected, a test 55 on the Surfer Key in queue is provided, a display current service (test 57) is performed, and if it is a pure data service, a wait screen (step 59) is displayed before going to step 56 (i.e. running in visible mode and activating or not the EPG press button).

If the test 55 (Surfer Key in queue) is negative, a test 61 (p+/p- Key in queue) is undertaken for either making the Surfer visible (step 62), perform the program select service (step 64) which will be described hereafter, and then eventually return to Transparent mode (67) or restore service environment (step 63), for instance if no connection at all tune to default service.

Then a test 65 « current service = pure data service » is performed.

Either a service is selected (step 66) and it is returned to step 56 for Surfer running in visible mode, or the Surfer is running in Transparent mode (step 67).

Selected Key 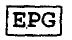 , 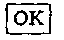 , 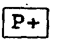 , 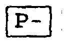 are then accessible either for making Surfer visible (step 68, from 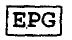 or 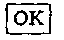 Keys) or for keeping it transparent ( 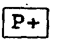 , 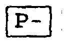 Keys).

Figure 7 provides an example of the re-launching of a Surfer according to an embodiment of the invention.

In any Surfer controlled bouquet, decoder's Navigator has to re-launch the Surfer each time any broadcasted application dies. The Navigator then controls the Remote Control (RC) keys as indicated on figure 7 and proceeds with appropriate actions, for instance requests any running application to quit and re-launch Surfer from memory.

When a service is running (step 70), the viewer may use any of RC keys, i.e. Exit Key, p+/p- Key, Surfer Key, Surfer selection Key, Bookmark Key and performs a test 72 for checking if a Cached Surfer is available.

If the viewer wishes to exit the application in 71, then a teat 73 on Surfer Running is performed.

If the Surfer is not running, a test 75 on the availability of the Surfer is undertaken, and if the response is no (line 79), the application is shut in 81.

If a Cached Surfer is available (line 83), a test 85 on the fact that an application is or not running is performed. If it is the case, the application is shut down in 87, if not, the Surfer is started in 89.

If the test 73 on the Surfer is positive, then the Surfer is shut in 72, and it is returned to the Navigator 74.

An application crash test 76 can be provided, leading to a test 78 on the service. If the current service is pure data service, a step 80 avoiding black TV screen is performed before coming back to application in 82.

If p+/p- Key is pressed, a test to determine if Cached Surfer is available is performed in 84.

If the response is positive, a step 86 starting the Surfer is provided, and Surfer is taking of request for service change.

If no Cached Surfer is available, a test 88 to find out if an application is running is undertaken. If it is the case, the application is shut down in 90, if not a service is selected in 92 with p+/p- Key.

When the Surfer Key is pressed, a test 91 on the availability of a Cached Surfer is provided.

If it is the case, the Surfer is started in 93 by pressing the EPG Key.

If not, a test on the Bouquet Service List is made in 95, and in case of positive response a test 97 on Surfer linkage is provided, which allows to select services (step 99) or goes to a test 101, also related to the Bouquet Service list test 95, for tracking the « SURF » features in 101.

If no « SURF » track is found, no Surfer is displayed. If a « SURF » track is found, a test 103 on inflash Flag = Surfer Application is performed.

If not, a normal application is started in 105.

Otherwise, the Surfer is loaded in 107 and the Surfer is started in 109.

If the Surfer Selection Key is pressed, a test 94 on Cache Surfer availability is provided.

If the response is positive, a test 96 on the running of a Surfer is performed and if it is the case, the Surfer is shut down in 98.

If it is a negative response on the running, then a test 100 on application running is provided. If the response is positive the application is shut in 102.

If the response is no, or after such stopping of the application, the Surfer is started in 104, to be shut in 98.

Then the Surfer selection layer 106 is reached.

The other path for reaching such layer goes through the negative response to test 94.

The test 108 « Application running » is then provided.

If not, or if yes after shut down of application in 110, the Surfer Selection layer is finally also reached.

Depending on the type of service one is currently selecting, Navigator or Surfers need to perform similar actions. For instance the program « Select Service » in case of a data Service that carries an Open TV application, including video and audio components, should not get opened while any application is being downloadable into decoders memory and a wait-screen shall be displayed. Furthermore, any service containing Open TV components has a default Open TV component. Usually this Open TV component is a broadcasted application. In some services EPG\0 or SURF component is considered being service's default component or track.

The specific program « Select Service » (not represented by a diagram here) then leads back to the process that is performing Channel changing. For instance a Surfer will keep control after changing services and staying visible in OSD, while Navigator might launch an application component after changing Services right away.

In fact, the system remains in Surfer-control-state as long as the viewer is not requesting the built-in control level (the Banner). On this level the viewer can select other services or choose any other Surfer that is available in networks.

The IRD system must guarantee that there is only one Surfer at a time and running, if the IRD is in Surfer-control-state. In system environments, where several applications can run at a time, a Surfer application is considered as a privileged application with a certain fixed set of system resources. The Surfer is not going to be edged out as long as the viewer does not request the decoder to return into the service selection layer.

In system environments, where multiple concurrent applications are being managed by the system, Surfers are only privileged applications.

In system environments, where only one application is allowed being executed at a time, Surfer must be re-launched after any ordinary application has been temporary launched and finished execution, as described hereabove.

In Surfer-control state, Surfer shall be loaded and temporary stored into its dedicated part of IRD's memory or Cache, until the viewer returns to the built-in control state. Also, in Surfer-control state, the Surfer must be accessible in any case, since the Surfer is in charge of maintaining the System environment. Again, this allows the viewer to tune to other networks and re-launching the Surfer, even though there is temporary no physical connection to the network to which the Surfer was previously loaded from.

Caching the Surfer into the IRD's memory will also accelerate Surfer start time on re-launch event.

In the Surfer-controlled state, the decoder is either running the current Surfer or an ordinary application. As soon as an ordinary application is finished the Surfer will come up again. After the viewer requested the built-in state, the Surfer will need to run a clean up process in order to make a clean sweep. The IRD does not consider any Surfer in the built-in control-state for any navigation purposes. It is therefore unimportant if the Surfer application is physically erased. The decoder system will maintain the knowledge of being in either state.

In one embodiment, in order to guarantee that only one Surfer is taking control of the decoder's navigation functions, decoder's Surfer resources are unique resources in the decoder system. A Surfer task or a Surfer memory slot exists only once. Moreover logical flags indicating the IRD's status are present in the decoders system only once. There is no knowledge of competing Surfers in the system. It is therefore at any time clear what part of the system is handling service navigation events.

Apart from links to particular services the IRD built-in software will allow the viewer to select a Surfer from a list of Surfers. The IRD therefore need knowledge about existence and location of any Surfer applications.

The way of advertising and indicating Surfer application is network specific and does not interfere with the service browser concept. Surfers could be indicated for instance as a particular service type, or a specific component tag within a channel or program. It is then the decoder's responsibility to find Surfers across the networks and to present links to those browser applications.

Additional remarks are made concerning the. decoder. In the prior art any application is allowed to take advantage of decoders' resources. However some resources are limited and sensitive in terms of the proper behaviour and performance of any decoder. The decoders' permanent memory in EEPROM or Flash is one of the most critical points.

With the embodiment of the invention more particularly described here, it will now be defined the following ;

### File System Policy

Any application could allocate all remaining space in decoders File System for a very long time. Since there is no System administrator any other application has to wait for the expiration date of this file before it can make use of the decoders file system. In order to avoid one broadcaster or service provider blocking the decoder's File System memory to other applications, a producer based partitioning of the whole memory is recommended. Any broadcaster or service operator of the environment system of the invention, shall use a range of producer identifications. Only some producers ids are allowed to allocate memory in the File System.

The consumer may select this producer Ids. Actually he is performing the partitioning of his decoders' memory and therefore the consumer decides which broadcaster may take advantage of the decoders resources.

Furthermore any service provider (producer) is in charge of "his" part of memory. This will lead to a careful use of memory allocation in File System. There is a minimum slot size a consumer might allocate for each broadcaster.

### Bouquets' slot size

In a embodiment of the invention, a minimum Slot Size of 32 kbytes shall be available in the decoders permanent memory for any bouquet operator that has been authorised by the consumer to allocate memory in the permanent File-System.

### Bouquet Memory Identification

Any application will be identified by a producer ID and an application ID. The producer ID has to be a unique value.

An open TV producer ID contains for example a DVB Bouquet ID in order to identify the Bouquet provider. This value is used to identify the path in the file system and application is allowed to store data.

### Slot management Policy

The decoder shall have 128 Kbytes available for Ram File System and 256 Kbytes of Flash memory available for Flash File System.

Quota Management Policy applies for permanent part of the decoders File System, the Flash File System.

Only application with appropriate authorisation flags are allowed to allocate space in the File System, Flash or Ram. Only applications with appropriate Producer ID and authorisation flags are allowed to use Flash File System. Manufacturer needs therefore to customise the file System usage.

Therefore, the decoder needs to maintain a list of valid ProducerIDs, that are allowed to write into the Flash File System. Attached to this list there is a total value, which is currently allocated in each 32Kbytes Slot in Flash File System. Any broadcasted application comes with a figure of how much memory it intends to allocate. In case this number exceeds the remaining space, it could be overwritten and lowered to the maximum left amount. Any further memory allocation is then handled by Open TV and allocation requests that exceeds this limit will be denied.

It will now be described an example of functioning of a system according to an embodiment of the invention.

From a Remote Control Key boards the viewer is selecting a list of Bouquets, i.e. five bouquets among which two include Surfers (Bouquet 1 and 2).

Then one bouquet including a Surfer is selected by pressing the 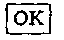 button, for instance Bouquet 1.

The decoder tunes to the default service of Bouquet 1 and download the Surfer in the Surfer Cache.

The Surfer is then launched from the Surfer Cache on the TV screen while the decoder is simultaneously tuned to Bouquet 1.

Then the Surfer is displayed on part of the TV Screen, for instance on top of the running default audio-video service (the default channel of the Bouquet) in the form of a scrolling list mentionning all the channels of the Bouquet.

Then a channel is selected on the list by pressing up and down buttons.

When the right channel is reached, the viewer tunes the decoder to said selected channel by pressing the OK button.

If a Bouquet deprived of a Surfer having a specific look and feel is selected, the viewer has access to normal application including EPG only through the Built-in Banner look and feel.

In case of Surfer, instead of tuning to a regular TV channel (normal application), it is possible to tune to an EPG application which will provide events information on an interactive basis.

Each time, another channel with an application (i.e. not only an audio or video service, but also an EPG application) is selected from the Surfer, the Surfer has to be relaunched from the Surfer Cache.

Additional advantages and modifications will readily occur to those skilled in the art. Therefore the present invention in its broader aspects is not limited to the specific details, representative device and diagrams, and illustrated examples shown and described herein.

## Claims

1. A service browser process for controlling navigation events between a plurality of services and/or channels of a digital interactive radio broadcasting system (1) including at least one digital interactive decoder (2) said system broadcasting applications to be received by said decoder, wherein the process proposes said services to a user of said decoder and enables the navigation to other services or channels through control means (15) activated by said user, **characterised in that** the applications being categorised into at least two types of applications including a first type corresponding to a downloadable application termed surfer application designed for controlling said navigation and having knowledge of said services, and a second type to a built-in application (23) for presenting services, termed the built-in banner, the process comprises the steps of:
(i) identifying (21) in a broadcast stream a surfer application;
(ii) tuning to a service with the identified surfer (step 34);
(iii) downloading (27,35) the surfer application within a dedicated part (22) of the decoder memory (20), called surfer cache;
(iv) detecting a navigation event;
(v) checking (29,30) whether a surfer application is available or said decoder is under the control of a surfer application;
(vi) routing (31,32) said navigation event to the surfer application in response to determining the surfer application is available or the decoder is under the control of the surfer application; and
(vii) routing said navigation event to a built-in banner responsive to determining no surfer application is available and the decoder is not under the control of a surfer application.

2. A process according to claim 1, wherein in response to detecting said navigation event and determining the surfer application is available, the process further comprises the steps of:
- starting said surfer application;
- said surfer application entering a visible mode of operation; and
- selecting a service corresponding to said navigation event.

3. A process according to any one of the preceding claims, **characterised in that** the surfer application is stopped when an application different from a surfer application, termed normal application, is displayed, and is re-launched from its sufer cache when said normal application is finished.

4. A process according to any one of claims 1 to 3, **characterised in that** a plurality of surfer applications being possible, it comprises the step of:
- presenting (42) an interface using a list of surfers applications that allows the user to select one particular surfer application among said list and to come back to said list after selection, if wanted.

5. A process, according to any one of the preceding claims, **characterised in that** it is implemented in a DVB environment, the surfer applications being signalled in bouquet association tables (BAT).

6. A process according to any one of the preceding claims, **characterised in that** it further includes the downloading of a plurality of surfer applications within corresponding surfer caches, and the selection of one of said surfer application.

7. A process according to any one of the preceding claims, **characterised in that** the surfer application has a visible and a transparent mode of running.

8. A digital interactive radio-broadcasting system (1) for controlling navigation events between a plurality of services and/or channels, including at least one digital interactive decoder (2), said system broadcasting applications to be received by said decoder, wherein the system proposes said services to a user of said decoder and enables the navigation to other services or channels through control means activated by said user, **characterised in that** the applications being categorised into at least two types of applications including a first type termed surfer application designed for controlling said navigation and having knowledge of said services, and a second type corresponding to a built-in application (23) for presenting services, termed the built-in banner, the decoder comprises:
(i) identifying means (21) for identifying in a broadcast stream a surfer application;
(ii) means (34) for tuning to a service with the identified surfer;
(iii) downloading means (27,35) for downloading the surfer application within a dedicated part of the decoder memory, called surfer cache (22);
(iv) detection means for detecting a navigation event;
(v) checking means (29,30) for checking whether a surfer application is available or said decoder is under control of a surfer application;
(vi) routing means (31,32) arranged for routing said navigation event to the surfer application in case the surfer application is available or the decoder is controlled by said surfer application; and
(vii) routing means arranged for routing said navigation event to a built-in banner in case no surfer application is available and the decoder is not controlled by a surfer application.

9. A system according to claim 8, wherein in response to detecting said navigation event and determining the surfer application is available, the decoder further comprises means (68) to start said surfer application and make said surfer visible; and means (58) for selecting a service corresponding to said navigation event.

10. A system according to any one of claims 8 to 9, **characterised in that** it comprises stopping means for stopping the surfer application when an application different from a surfer application, termed normal application, is displayed, and re-launching means for re-launching said surfer application from the surfer cache when said normal application is finished.

11. A system according to any one of claims 8 to 10, **characterised in that** a plurality of surfer applications being possible, it comprises means (41) for presenting an interface using a list of services that allows the user to select one particular surfer application among said list and to come back to said list after selection, if wanted.

12. A system according to any one of claims 8 to 11, **characterised in that** the memory (20) of the decoder (2) comprises a plurality of surfer caches for storing corresponding different surfer applications.

13. A system according to any one of claims 8 to 12, **characterised in that** it is implemented in a DVB environment, the surfer applications being signalled in ,bouquet association tables (BAT) .

## Patentansprüche

1. Dienst-Browser-Verfahren zur Steuerung von Navigationsereignissen zwischen einer Vielzahl von Diensten und/oder Kanälen eines digitalen interaktiven Radiosendesystems (1), das mindestens einen digitalen interaktiven Decodierer (2) umfasst, wobei die Systemsendeanwendungen von dem Decodierer empfangen werden sollen, wobei das Verfahren einem Benutzer des Decodierers die Dienste anbietet und die Navigation zu anderen Diensten oder Kanälen durch Steuerungsmittel (15), die von dem Benutzer aktiviert werden, ermöglicht, **dadurch gekennzeichnet, dass** da die Anwendungen in mindestens zwei Typen von Anwendungen kategorisiert werden, einschließlich eines ersten Typs, der einer herunterladbaren Anwendung entspricht, die Surfer-Anwendung genannt wird, und die dafür ausgelegt ist, die Navigation zu steuern und über Kenntnisse über die Dienste zu verfügen, sowie eines zweiten Typs, der einer eingebauten Anwendung (23) zur Darstellung von Diensten entspricht, die eingebautes Kopfelement genannt wird, das Verfahren folgende Schritte umfasst:
(i) Identifizieren (21) einer Surfer-Anwendung in einem Sendestrom;
(ii) Abstimmen auf einen Dienst mit dem identifizierten Surfer (Schritt 34);
(iii) Herunterladen (27,35) der Surfer-Anwendung innerhalb eines dedizierten Teils (22) des Decodiererspeichers (20), der Surfer-Pufferspeicher genannt wird;
(iv) Erfassen eines Navigationsereignisses;
(v) Prüfen (29, 30), ob eine Surfer-Anwendung verfügbar ist oder ob der Decodierer von einer Surfer-Anwendung gesteuert wird;
(vi) Weiterleiten (31, 32) des Navigationsereignisses zur Surfer-Anwendung als Reaktion auf die Feststellung, dass die Surfer-Anwendung verfügbar ist oder dass der Decodierer von der Surfer-Anwendung gesteuert wird; und
(vii) Weiterleiten des Navigationsereignisses zu einem eingebauten Kopfelement, das auf die Feststellung reagiert, dass keine Surfer-Anwendung verfügbar ist und der Decodierer nicht von der Surfer-Anwendung gesteuert wird.

2. Verfahren nach Anspruch 1, wobei als Reaktion auf die Erfassung des Navigationsereignisses und der Feststellung, dass die Surfer-Anwendung verfügbar ist, das Verfahren des Weiteren folgende Schritte umfasst:
- Starten der Surfer-Anwendung;
- Übergehen der Surfer-Anwendung in einen sichtbaren Betriegsmodus; und
- Auswählen eines Dienstes, der dem Navigationsereignis entspricht.

3. Verfahren nach einem der vorhergehenden Ansprüche, **dadurch gekennzeichnet, dass** die Surfer-Anwendung gestoppt wird, wenn eine Anwendung, die von einer Surfer-Anwendung verschieden ist und die normale Anwendung genannt wird, angezeigt wird, und die Surfer-Anwendung von ihrem Surfer-Pufferspeicher neu gestartet wird, wenn die normale Anwendung beendet ist.

4. Verfahren nach einem der Ansprüche 1 bis 3, **dadurch gekennzeichnet, dass** eine Vielzahl von Surfer-Anwendungen möglich ist, wobei das Verfahren folgende Schritte umfasst:
- Darstellen (42) einer Schnittstelle unter Verwendung einer Liste von Surfer-Anwendungen, die dem Benutzer ermöglicht, eine bestimmte Surfer-Anwendung aus der Liste auszuwählen, und nach der Auswahl, falls gewünscht, auf die Liste zurückzukommen.

5. Verfahren nach einem der vorhergehenden Ansprüche, **dadurch gekennzeichnet, dass** es in einer DVB-Umgebung implementiert ist, wobei die Surfer-Anwendungen in Bukettzuordnungstabellen (BAT) signalisiert werden.

6. Verfahren nach einem der vorhergehenden Ansprüche, **dadurch gekennzeichnet, dass** es des Weiteren das Herunterladen einer Vielzahl von Surfer-Anwendungen in die entsprechenden Surfer-Pufferspeicher und die Auswahl einer der Surfer-Anwendungen umfasst.

7. Verfahren nach einem der vorhergehenden Ansprüche, **dadurch gekennzeichnet, dass** die Surfer-Anwendung einen sichtbaren und einen transparenten Betriebsmodus aufweist.

8. Digitales interaktives Radiosendesystem (1) zur Steuerung von Navigationsereignissen zwischen einer Vielzahl von Diensten und/oder Kanälen, das mindestens einen digitalen interaktiven Decodierer (2) umfasst, wobei die Systemsendeanwendungen von dem Decodierer empfangen werden sollen, wobei das System einem Benutzer des Decodierers die Dienste anbietet und die Navigation zu anderen Diensten oder Kanälen durch Steuerungsmittel, die von dem Benutzer aktiviert werden, ermöglicht, **dadurch gekennzeichnet, dass** da die Anwendungen in mindestens zwei Typen von Anwendungen kategorisiert werden, einschließlich eines ersten Typs, der Surfer-Anwendung genannt wird, und der dafür ausgelegt ist, die Navigation zu steuern und über Kenntnisse über die Dienste zu verfügen, sowie eines zweiten Typs, der einer eingebauten Anwendung (23) zur Darstellung von Diensten entspricht, die eingebautes Kopfelement genannt wird, der Decodierer Folgendes umfasst:
(i) ein Identifikationsmittel (21) zum Identifizieren einer Surfer-Anwendung in einem Sendestrom;
(ii) Mittel (34) zum Abstimmen auf einen Dienst mit dem identifizierten Surfer (Schritt 34);
(iii) Herunterlademittel (27, 35) zum Herunterladen der Surfer-Anwendung in einen dedizierten Teil des Decodiererspeichers (20), der Surfer-Pufferspeicher (22) genannt wird;
(iv) Erfassungsmittel zum Erfassen eines Navigationsereignisses;
(v) Prüfrnittel (29, 30) zum Prüfen, ob eine Surfer-Anwendung verfügbar ist oder ob der Decodierer von einer Surfer-Anwendung gesteuert wird;
(vi) Weiterleitmittel (31, 32), das dafür ausgelegt ist, im Fall, dass die Surfer-Anwendung verfügbar ist oder der Decodierer von der Surfer-Anwendung gesteuert wird, das Navigationsereignis zur Surfer-Anwendung weiter zu leiten; und
(vii) Weiterleitmittel, das dafür ausgelegt ist, im Fall, dass keine Surfer-Anwendung verfügbar ist und der Decodierer nicht von einer Surfer-Anwendung gesteuert wird, das Navigationsereignis zu einem eingebauten Kopfelement weiter zu leiten.

9. System nach Anspruch 8, wobei der Decodierer als Reaktion auf die Erfassung des Navigationsereignisses und die Feststellung, dass die Surfer-Anwendung verfügbar ist, des Weiteren Mittel (68), um die Surfer-Anwendung zu starten und den Surfer sichtbar zu machen, sowie Mittel (58) zur Auswahl eines Dienstes, der dem Navigationsereignis entspricht, umfasst.

10. System nach einem der Ansprüche 8 bis 9, **dadurch gekennzeichnet, dass** es Stoppmittel zum Stoppen der Surfer-Anwendung umfasst, wenn eine Anwendung, die von einer Surfer-Anwendung verschieden ist und die normale Anwendung genannt wird, angezeigt wird, und dass das System Neustartmittel umfasst, um die Surfer-Anwendung von ihrem Surfer-Pufferspeicher neu zu starten, wenn die normale Anwendung beendet ist.

11. System nach einem der Ansprüche 8 bis 10, **dadurch gekennzeichnet, dass** da eine Vielzahl von Surfer-Anwendungen möglich ist, das System Mittel (41) zum Darstellen einer Schnittstelle unter Verwendung einer Liste von Diensten umfasst, die dem Benutzer ermöglicht, eine bestimmte Surfer-Anwendung aus der Liste auszuwählen, und nach der Auswahl, falls gewünscht, auf die Liste zurückzukommen.

12. System nach einem der Ansprüche 8 bis 11, **dadurch gekennzeichnet, dass** der Speicher (20) des Decodierers (2) eine Vielzahl von Surfer-PuSerspeichern zum Speichern entsprechender verschiedener Surfer-Anwendungen umfasst.

13. System nach einem der Ansprüche 8 bis 12, **dadurch gekennzeichnet, dass** es in einer DVB-Umgebung implementiert ist, wobei die Surfer-Anwendungen in Bukettzuordnungstabellen (BAT) signalisiert werden.

## Revendications

1. Un processus d'exploration de services destiné à contrôler des événements de navigation entre une pluralité de services et/ou de canaux d'un système de radiodiffusion interactif numérique (1) comprenant au moins un décodeur interactif numérique (2), lesdites applications de radiodiffusion système destinées à être reçues par ledit décodeur, où le processus propose lesdits services à un utilisateur dudit décodeur et permet la navigation vers d'autres services ou canaux par l'intermédiaire de moyens de contrôle (15) activés par ledit utilisateur, **caractérisé par le fait que**, les applications étant catégorisées en au moins deux types d'applications incluant un premier type correspondant à une application téléchargeable appelée application de navigation conçue pour contrôler ladite navigation et connaissant lesdits services, et un deuxième type correspondant à une application intégrée (23) destinée à présenter les services, appelée page d'ouverture intégrée, le processus comprend les étapes suivantes :
(i) identifier (21) dans un flux de radiodiffusion une application de navigation ;
(ii) se brancher sur un service à l'aide du navigateur identifié (étape 34);
(iii) télécharger (27, 35) l'application de navigation dans une zone dédiée (22) de la mémoire du décodeur (20), appelée mémoire tampon du navigateur ;
(iv) détecter un événement de navigation ;
(v) vérifier (29, 30) qu'une application de navigation est disponible ou que ledit décodeur est sous le contrôle d'une application de navigation ;
(vi) acheminer (31, 32) ledit événement de navigation vers l'application de navigation en réponse à la détermination que l'application de navigation est disponible ou que le décodeur est sous le contrôle de l'application de navigation ; et
(vii) acheminer ledit événement de navigation vers une page d'ouverture intégrée répondant à la détermination qu'aucune application de navigation n'est disponible et que le décodeur n'est pas sous le contrôle d'une application de navigation.

2. Un processus selon la Revendication 1, où en réponse à la détection dudit événement de navigation et à la détermination que l'application de navigation est disponible, le processus comprend en outre les étapes suivantes :
- lancement de ladite application de navigation ;
- entrée de ladite application de navigation dans un mode de fonctionnement visible ; et
- sélection d'un service correspondant au dit événement de navigation.

3. Un processus selon l'une quelconque des Revendications précédentes, **caractérisé par le fait que** l'application de navigation est arrêtée lorsqu'une application autre qu'une application de navigation, appelée application normale, est affichée, et est relancée à partir de sa mémoire tampon de navigateur lorsque ladite application normale est refermée.

4. Un processus selon l'une quelconque des Revendications 1 à 3, **caractérisé par le fait qu'**une pluralité d'applications de navigation étant possible, le processus comprend l'étape suivante :
- présentation (42) d'une interface contenant une liste des applications de navigation qui permet à l'utilisateur de sélectionner une application de navigation particulière dans ladite liste et de revenir à ladite liste après la sélection, si nécessaire.

5. Un processus selon l'une quelconque des Revendications précédentes, **caractérisé par le fait qu'**il est mis en oeuvre dans un environnement de radiodiffusion vidéonumérique, les applications de navigation étant signalées dans des tables d'association de bouquet (BAT).

6. Un processus selon l'une quelconque des Revendications précédentes, **caractérisé par le fait qu'**il comprend en outre le téléchargement d'une pluralité d'applications de navigation dans les mémoires tampons de navigateur correspondantes et la sélection de l'une desdites applications de navigation.

7. Un processus selon l'une quelconque des Revendications précédentes, **caractérisé par le fait que** l'application de navigation possède un mode de fonctionnement visible et un mode de fonctionnement transparent.

8. Un système de radiodiffusion interactif numérique (1) destiné à contrôler des événements de navigation entre une pluralité de services et/ou de canaux, comprenant au moins un décodeur interactif numérique (2), lesdites applications de radiodiffusion système destinées à être reçues par ledit décodeur, où le système propose lesdits services à un utilisateur dudit décodeur et permet la navigation vers d'autres services ou canaux par l'intermédiaire de moyens de contrôle activés par ledit utilisateur, **caractérisé par le fait que**, les applications étant catégorisées en au moins deux types d'applications incluant un premier type appelé application de navigation conçue pour contrôler ladite navigation et connaissant lesdits services, et un deuxième type correspondant à une application intégrée (23) destinée à présenter les services, appelée page d'ouverture intégrée, le décodeur comprend :
(i) des moyens d'identification (21) permettant d'identifier dans un flux de radiodiffusion une application de navigation ;
(ii) des moyens (34) permettant de se brancher sur un service à l'aide du navigateur identifié ;
(iii) des moyens de téléchargement (27, 35) permettant de télécharger l'application de navigation dans une zone dédiée de la mémoire du décodeur, appelée mémoire tampon du navigateur (22);
(iv) des moyens de détection permettant de détecter un événement de navigation ;
(v) des moyens de vérification (29, 30) permettant de vérifier qu'une application de navigation est disponible ou que ledit décodeur est sous le contrôle d'une application de navigation ;
(vi) des moyens d'acheminement (31, 32) destinés à acheminer ledit événement de navigation vers l'application de navigation au cas où l'application de navigation est disponible ou que le décodeur est contrôlé par ladite application de navigation ; et
(vii) des moyens d'acheminement organisés de façon à acheminer ledit événement de navigation vers une page d'ouverture intégrée au cas où aucune application de navigation n'est disponible et que le décodeur n'est pas contrôlé par une application de navigation.

9. Un système selon la Revendication 8, où en réponse à la détection dudit événement de navigation et à la détermination que l'application de navigation est disponible, le décodeur comprend en outre des moyens (68) permettant de lancer ladite application de navigation et de rendre ledit navigateur visible ; et des moyens (58) de sélectionner un service correspondant au dit événement de navigation.

10. Un système selon l'une quelconque des Revendications 8 ou 9, **caractérisé par le fait qu'**il comprend des moyens d'arrêt permettant d'arrêter l'application de navigation lorsqu'une application autre qu'une application de navigation, appelée application normale, est affichée, et des moyens de relance permettant de relancer ladite application de navigation à partir de la mémoire tampon de navigateur lorsque ladite application normale est refermée.

11. Un système selon l'une quelconque des Revendications 8 à 10, **caractérisé par le fait qu'**une pluralité d'applications de navigation étant possible, le système comprend des moyens (41) permettant de présenter une interface contenant une liste de services qui permet à l'utilisateur de sélectionner une application de navigation particulière dans ladite liste et de revenir à ladite liste après la sélection, si nécessaire.

12. Un système selon l'une quelconque des Revendications 8 à 11, **caractérisé par le fait que** la mémoire (20) du décodeur (2) comprend une pluralité de mémoires tampons de navigateur pour le stockage des différentes applications de navigation correspondantes.

13. Un système selon l'une quelconque des Revendications 8 à 12, **caractérisé par le fait qu'**il est mis en oeuvre dans un environnement de radiodiffusion vidéonumérique, les applications de navigation étant signalées dans des tables d'association de bouquet (BAT).
